# FASCICULE DE BREVET EUROPEEN

(11) **EP 4 100 625 B1**
(45) Date de publication et mention de la délivrance du brevet: **26.03.2025**
(21) Numéro de dépôt: 21707353.5
(22) Date de dépôt: 04.02.2021
(51) Int. Cl.: F04D 29/16, F04D 29/32, F04D 29/52, F01D 5/14, F01D 5/20, F04D 29/68

(54) **AUBE DE ROTOR POUR UNE TURBOMACHINE**
ROTORBLATT FÜR EINE TURBOMASCHINE
ROTOR BLADE FOR A TURBOMACHINE

(30) Priorité: 07.02.2020 FR 2001221
(43) Date de publication de la demande: 14.12.2022
(73) Titulaire: Safran Helicopter Engines, 64510 Bordes (FR)
(72) Inventeur: BOUCHIA, Youssef, 77550 MOISSY-CRAMAYEL (FR); TARNOWSKI, Laurent Pierre, 77550 MOISSY-CRAMAYEL (FR)
(74) Mandataire: Gevers & Orès
(86) Numéro de dépôt international: PCT/FR2021/050213
(87) Numéro de publication internationale: WO 2021/156577

(56) Documents cités:
- EP-A1- 1 980 753
- EP-A1- 2 309 098
- EP-A2- 0 916 811
- FR-A5- 2 054 402
- US-A- 6 027 306
- US-A1- 2010 166 566

## Description

### Domaine technique de l'invention

La présente invention concerne une aube de rotor pour une turbomachine, en particulier d'aéronef. Le domaine de l'invention est celui des modules de turbomachine comportant un rotor équipé de plusieurs aubes, et notamment les modules de type roues de turbine ou de compresseur, rouets mixtes et/ou centrifuges, compresseurs axiaux, mixtes et centrifuge, ainsi que les modules comportant des aubes directrices d'entrée.

### Arrière-plan technique

L'état de la technique comprend, notamment, les documents USA-6027306, FR-A5-2054402. EP-A-2309098, US-A1-2010/166566, EP-A2-0916811 et EP-A1-1980753. Dans les étages de compression subsonique ou supersonique de turbomachines, des aubes sont utilisées pour permettre de comprimer le fluide. Une telle aube de turbomachine comprend classiquement une pale comportant un intrados et un extrados s'étendant depuis un bord d'attaque jusqu'à un bord de fuite. Or, par conception, il existe un jeu entre la tête de la pale et le carter ou couvercle. Ce jeu permet le passage du fluide du côté des fortes pressions (intrados) vers le côté des faibles pressions (extrados), et est la source d'écoulements secondaires. Or, de tels écoulements secondaires perturbent l'écoulement sain et réduisent les performances et le rendement de compression des étages de compression.

Il existe donc un besoin de pouvoir disposer d'une aube de rotor pour turbomachine, permettant de réduire les écoulements secondaires dus au jeu de fonctionnement entre la tête de la pale et le carter ou couvercle, tout en améliorant les performances aérodynamiques de l'aube.

La présente invention a notamment pour but de résoudre tout ou partie des problèmes précités.

### Résumé de l'invention

La présente invention propose à cet effet une aube de rotor pour une turbomachine, en particulier d'aéronef, comportant une pale comportant un intrados et un extrados s'étendant depuis un bord d'attaque jusqu'à un bord de fuite, la pale comportant un axe d'allongement s'étendant sensiblement le long des bords d'attaque et de fuite, la pale comportant une extrémité radialement interne de liaison à un rotor et une extrémité radialement externe libre.

Selon l'invention, l'aube comprend en outre au moins une série d'ailettes situées sur ladite extrémité libre, chacune de ces ailettes comportant un intrados situé du côté de l'extrados de la pale, et un extrados situé du côté de l'intrados de la pale, et est caractérisée en ce que chacune des ailettes est vrillée autour de cet axe d'allongement.

L'invention permet ainsi, grâce à une telle configuration des ailettes, de créer un gradient de pression opposé à la circulation de l'écoulement de jeu qui circule de la face en pression (intrados) de la pale vers la face en dépression (extrados) de cette dernière. En effet, de telles ailettes dont la courbure est inversée par rapport à celle de la pale jouent le rôle d'écrans en empêchant le fluide de pouvoir circuler de la face en pression (intrados) vers la face en dépression (extrados) dans la zone de jeu. Ceci permet d'accroître les performances (débit, taux) et le rendement isentropique en réduisant au maximum les écoulements de jeu en tête de pale. Le gradient de pression opposé est créé au travers du choix de la courbure des ailettes. En outre, la présence de telles ailettes ainsi configurées permet d'obtenir un gain aérodynamique par contrôle du vortex en tête de pale, ce qui contribue à améliorer la performance et/ou la stabilité du module comportant l'aube. Un tel gain aérodynamique devient par exemple primordial lorsque les pales sont de très petite taille. Enfin, la présente invention permet d'obtenir un gain en stabilité pour les compresseurs axiaux, ainsi qu'un accroissement du taux de pression totale du rotor.

L'aube selon l'invention peut comprendre une ou plusieurs des caractéristiques suivantes, prises isolément les unes des autres ou en combinaison les unes avec les autres :
- les ailettes de la ou de chaque rangée sont disposées les unes derrière les autres le long d'une corde de l'extrémité libre de la pale ;
- l'aube comprend une unique série d'ailettes ;
- les longueurs cumulées des cordes des ailettes représentent entre 80% et 120% d'une corde de l'extrémité libre de la pale ;
- le nombre d'ailettes de la ou de chaque série est compris entre 2 et 10, et de préférence entre 4 et 8, en particulier pour un compresseur axial ;
- le nombre d'ailettes de la ou de chaque série est fonction de la corde de l'aube, en particulier pour un compresseur centrifuge ;
- chacune des ailettes a une hauteur mesurée le long dudit axe d'allongement qui représente entre 1 et 10%, et de préférence entre 1 et 5%, de la hauteur de la pale mesurée le long du même axe ; et
- chacune des ailettes est inclinée par rapport audit axe d'allongement.

L'invention concerne aussi un module de turbomachine, en particulier d'aéronef, ce module comportant un rotor comportant une rangée annulaire d'aubes telles que décrites ci-dessus.

Le module de turbomachine selon l'invention peut comprendre une ou plusieurs des caractéristiques suivantes, prises isolément les unes des autres ou en combinaison les unes avec les autres :
- le module de turbomachine est choisi parmi une roue de turbine ou de compresseur, un rouet mixte ou centrifuge, et une soufflante ; et
- le rotor est entouré par un revêtement annulaire en matière abradable qui est logé dans une gorge d'un carter annulaire, cette gorge étant formée dans une surface cylindrique interne du carter qui a un diamètre interne sensiblement égal au diamètre du rotor passant par les extrémités libres des pales de ses aubes.

L'invention concerne aussi une turbomachine d'aéronef, comportant au moins une aube telle que décrite ci-dessus.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] la figure 1 est une vue schématique en perspective d'une aube de rotor de turbomachine, et en particulier de soufflante de turbomachine ;
[Fig.2] la figure 2 est une vue en perspective d'un module de turbomachine muni d'un rotor comportant une rangée annulaire d'aubes selon l'invention ;
[Fig.3] la figure 3 est une vue agrandie d'une partie du module de la figure 2, montrant une des aubes du rotor, l'aube comprenant une série d'ailettes ;
[Fig.4] la figure 4 est une vue de dessus de l'extrémité libre de l'aube de la figure 3 ;
[Fig.5] la figure 5 est une vue en coupe méridienne de l'aube de la figure 3 ;
[Fig.6] la figure 6 est une vue agrandie d'une partie de l'aube de la figure 5, montrant trois des ailettes de l'aube ;
[Fig.7] la figure 7 est une vue de profil d'une des ailettes de la figure 5 ;
[Fig.8] la figure 8 est une vue en coupe méridienne d'une aube d'un rouet.

### Description détaillée de l'invention

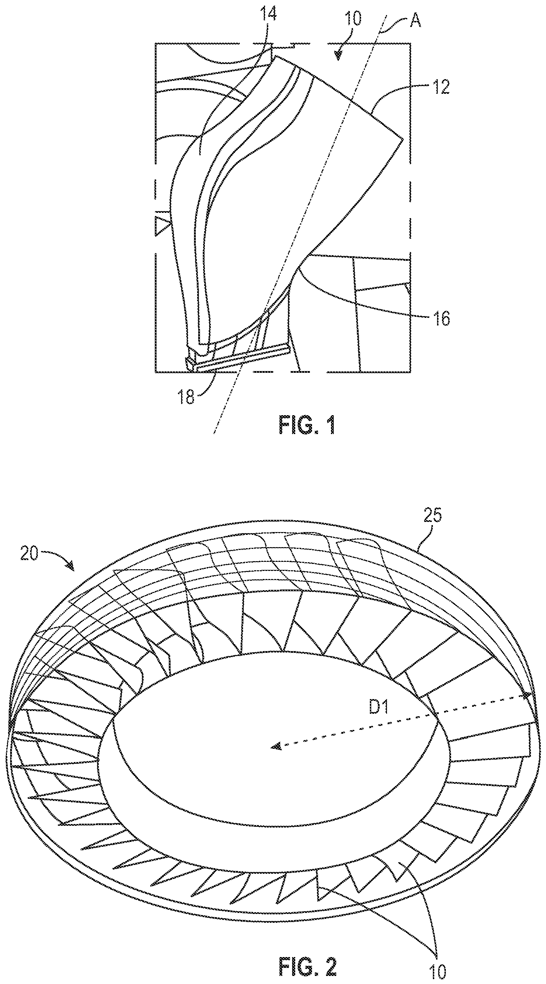

La figure 1 montre une aube de rotor 10 de turbomachine et en particulier de soufflante d'une turbomachine d'aéronef. Cette aube 10 comprend une pale 12 qui comporte un bord d'attaque 14 et un bord de fuite 16, opposé au bord d'attaque.

La pale 12 a un profil aérodynamique et comprend un intrados 15 et un extrados 17 s'étendant entre les bords d'attaque 14 et de fuite 16 de la pale. L'aube 10 présente un axe d'allongement noté A. Dans la présente demande, on entend par l'axe d'allongement de la pale, l'axe qui s'étend sensiblement le long des bords d'attaque et de fuite 14, 16 de la pale 12, et en particulier entre les bords d'attaque et de fuite.

Une extrémité longitudinale de la pale 12 est libre et l'extrémité longitudinale opposée est par exemple reliée à un pied 18 pour la fixation de l'aube à un rotor de la turbomachine.

Les figures 2 et suivantes illustrent des modes de réalisation de l'invention.

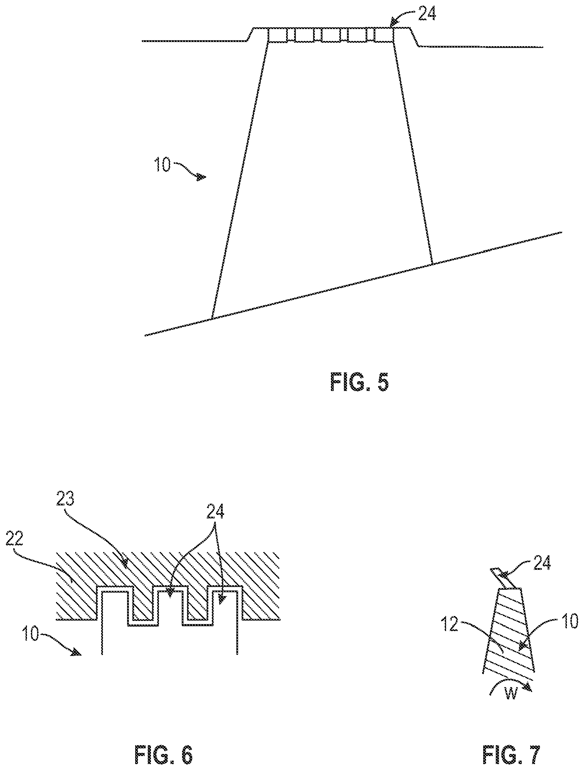

La figure 2 montre un module 20 muni d'un rotor comportant une rangée annulaire d'aubes 10 selon l'invention. De préférence, et comme illustré sur la figure 6, le module 20 comprend également un revêtement annulaire 22 en matière abradable qui est logé dans une gorge 23 d'un carter annulaire 25 (le carter 25 étant visible sur la figure 2). La gorge 23 est formée dans une surface cylindrique interne du carter 25 qui a un diamètre interne D1 sensiblement égal au diamètre du rotor passant par les extrémités libres des pales 12 de ses aubes 10. Le module 20 est par exemple une roue de turbine ou de compresseur, un rouet mixte ou centrifuge, ou encore une soufflante. Un compresseur axial dispose d'une entrée axiale et d'une sortie axiale, un rouet mixte dispose d'une entrée axiale et d'une sortie inclinée, et un rouet centrifuge dispose d'une entrée axiale et d'une sortie radiale.

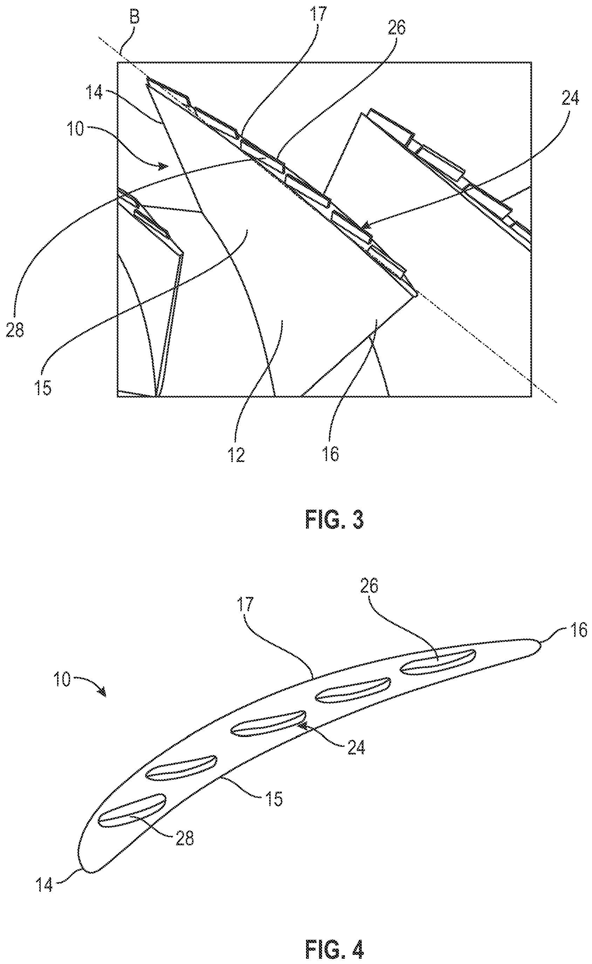

Les figures 3 et 4 montrent l'extrémité libre d'une des aubes 10 selon l'invention. Cette extrémité libre montre le profil aérodynamique de la pale 12. Dans la présente demande, on entend par « corde », la ligne droite imaginaire qui relie le bord d'attaque 14 au bord de fuite 16 de la pale. Une corde B peut être dessinée, comme illustré sur la figure 3, sur l'extrémité libre de la pale 12. Une telle corde peut toutefois être dessinée sur toute section transversale de la pale faite perpendiculairement à l'axe d'allongement A précité. L'aube 10 comprend au moins une série d'ailettes 24 situées sur l'extrémité libre de la pale 12. De préférence, le nombre d'ailettes 24 de la ou de chaque série est compris entre 2 et 10, et préférentiellement entre 4 et 8. Dans l'exemple de réalisation particulier illustré sur les figures 3 à 5, l'aube 10 comprend une unique série de six ailettes 24. De préférence, et comme visible sur les figures 3 à 5, les ailettes 24 de chaque rangée sont disposées les unes derrière les autres le long de la corde B de l'extrémité libre de la pale 12. Les aubes 10 peuvent équiper un compresseur axial par exemple d'une turbomachine d'aéronef.

Les ailettes 24 sont préférentiellement rapportées sur l'extrémité libre de la pale 12, par exemple via un procédé d'usinage additif. On entend par usinage additif, un procédé comprenant une étape de dépôt de matière pour créer une préforme des ailettes, et une étape d'usinage de cette préforme pour créer une forme finale des ailettes.

Comme illustré sur les figures 3 et 4, chacune des ailettes 24 comporte un intrados 26 situé du côté de l'extrados 17 de la pale 12, et un extrados 28 situé du côté de l'intrados 15 de la pale 12. De préférence, les longueurs cumulées des cordes des ailettes 24 représentent entre 80% et 120% de la corde B. De préférence encore, chaque ailette 24 a une hauteur mesurée le long de l'axe d'allongement A qui représente entre 1 et 10%, et de préférence entre 1 et 5%, de la hauteur de la pale 12 mesurée le long du même axe.

La figure 6 illustre un exemple de réalisation particulier où les ailettes 24 font leur place grâce à la présence du revêtement annulaire 22 en matière abradable qui est logé dans une gorge 23 du carter annulaire 25.

Selon une variante de réalisation particulière illustrée sur la figure 7, chaque ailette 24 est inclinée par rapport à l'axe d'allongement A. Dans cette variante, la flèche w indique le sens de rotation de l'aube 10. Les ailettes 24 sont inclinées vers le côté de l'aube 10 opposé au sens de rotation de cette dernière. Selon l'invention non représentée, chaque ailette 24 est vrillée autour de l'axe d'allongement A.

En fonctionnement, les ailettes 24 créent un gradient de pression opposé à la circulation de l'écoulement de jeu qui circule de l'intrados 15 de la pale 12 vers l'extrados 17 de la pale 12. Ceci est dû au fait que l'intrados 26 des ailettes 24 est tourné vers l'extrados 17 de la pale 12, et vice versa. Une telle configuration des ailettes 24 permet d'empêcher le fluide de pouvoir circuler de la face en pression (intrados 15) vers la face en dépression (extrados 17) de la pale 12 dans la zone de jeu. Les performances (débit, taux) et le rendement isentropique sont ainsi avantageusement accrus, tout en réduisant au maximum les écoulements de jeu en tête de pale. Le gradient de pression opposé est créé au travers du choix de la courbure des ailettes. En outre, la présence de telles ailettes 24 ainsi configurées permet d'obtenir un gain aérodynamique par contrôle du vortex en tête de pale, ce qui contribue à améliorer la performance et/ou la stabilité du module 20 comportant l'aube 10. Un tel gain aérodynamique devient par exemple primordial lorsque les pales 12 sont de très petite taille. Enfin, la présente invention permet d'obtenir un gain en stabilité pour les compresseurs axiaux, ainsi qu'un accroissement du taux de pression totale du rotor.

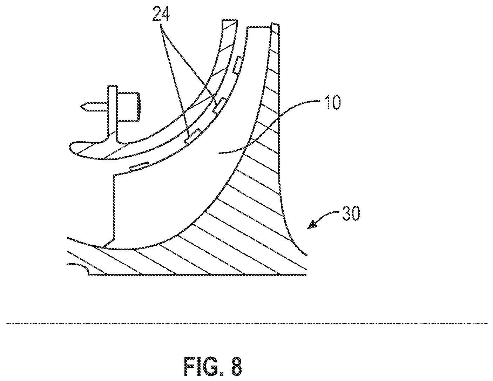

La figure 8 illustre l'application de l'invention à un rouet centrifuge 30. Chaque aube 10 du rouet 30 comprend un nombre d'ailettes 24 qui peut être fonction de la corde de cette aube.

## Revendications

1. Aube (10) de rotor pour une turbomachine, en particulier d'aéronef, comportant une pale (12) comportant un intrados (15) et un extrados (17) s'étendant depuis un bord d'attaque (14) jusqu'à un bord de fuite (16), la pale (12) comportant un axe d'allongement (A) s'étendant sensiblement le long des bords d'attaque (14) et de fuite (16), la pale (12) comportant une extrémité radialement interne de liaison à un rotor et une extrémité radialement externe libre, l'aube (10) comprenant en outre au moins une série d'ailettes (24) situées sur ladite extrémité libre, chacune de ces ailettes (24) comportant un intrados (26) situé du côté de l'extrados (17) de la pale (12), et un extrados (28) situé du côté de l'intrados (15) de la pale (12),
**caractérisée en ce que** chacune des ailettes (24) est vrillée autour de cet axe d'allongement (A).

2. Aube (10) selon la revendication 1, dans laquelle les ailettes (24) de la ou de chaque rangée sont disposées les unes derrière les autres le long d'une corde (B) de l'extrémité libre de la pale (12).

3. Aube (10) selon la revendication 1 ou 2, dans laquelle elle comprend une unique série d'ailettes (24).

4. Aube (10) selon l'une des revendications précédentes, dans laquelle les longueurs cumulées des cordes des ailettes (24) représentent entre 80% et 120% d'une corde (B) de l'extrémité libre de la pale (12).

5. Aube (10) selon l'une des revendications précédentes, dans laquelle le nombre d'ailettes (24) de la ou de chaque série est compris entre 2 et 10, et de préférence entre 4 et 8.

6. Aube (10) selon l'une des revendications précédentes, dans laquelle chacune des ailettes (24) a une hauteur mesurée le long dudit axe d'allongement (A) qui représente entre 1 et 10%, et de préférence entre 1 et 5%, de la hauteur de la pale (12) mesurée le long du même axe (A).

7. Aube (10) selon l'une des revendications précédentes, dans laquelle chacune des ailettes (24) est inclinée par rapport audit axe d'allongement (A) .

8. Module (20) de turbomachine, en particulier d'aéronef, ce module (20) comportant un rotor comportant une rangée annulaire d'aubes (10) selon l'une des revendications précédentes.

9. Module (20) selon la revendication précédente, dans lequel il est choisi parmi une roue de turbine ou de compresseur, un rouet mixte ou centrifuge, et une soufflante.

10. Module (20) selon la revendication 8 ou 9, dans lequel le rotor est entouré par un revêtement annulaire (22) en matière abradable qui est logé dans une gorge (23) d'un carter annulaire (25), cette gorge (23) étant formée dans une surface cylindrique interne du carter (25) qui a un diamètre interne (D1) sensiblement égal au diamètre du rotor passant par les extrémités libres des pales (12) de ses aubes (10).

11. Turbomachine d'aéronef, comportant au moins une aube (10) selon l'une des revendications 1 à 7.

## Patentansprüche

1. Rotorschaufel (10) für einer Turbomaschine, insbesondere eines Luftfahrzeugs, die ein Blatt (12) umfasst, das eine Unterseite (15) und eine Oberseite (17) umfasst, die sich von einer Anströmkante (14) bis zu einer Abströmkante (16) erstrecken, wobei das Blatt (12) eine Längsachse (A) umfasst, die sich im Wesentlichen entlang der Anström- (14) und der Abströmkante (16) erstreckt, wobei das Blatt (12) ein radial inneres Ende zur Verbindung mit einem Rotor und ein radial äußeres freies Ende umfasst, wobei die Schaufel (10) weiter mindestens eine Serie von Rippen (24) umfasst, die sich an dem freien Ende befinden, wobei jede dieser Rippen (24) eine Unterseite (26), die sich auf der Seite der Oberseite (17) des Blattes (12) befindet, und eine Oberseite (28) umfasst, die sich auf der Seite der Unterseite (15) des Blattes (12) befindet,
**dadurch gekennzeichnet, dass** jede der Rippen (24) um diese Längsachse (A) gewunden ist.

2. Schaufel (10) nach Anspruch 1, wobei die Rippen (24) der oder jeder Reihe hintereinander entlang einer Sehne (B) des freien Endes des Blattes (12) angeordnet sind.

3. Schaufel (10) nach Anspruch 1 oder 2, wobei diese eine einzige Serie von Rippen (24) umfasst.

4. Schaufel (10) nach einem der vorstehenden Ansprüche, wobei die kumulierten Längen der Sehnen der Rippen (24) zwischen 80 % und 120 % einer Sehne (B) des freien Endes des Blattes (12) ausmachen.

5. Schaufel (10) nach einem der vorstehenden Ansprüche, wobei die Anzahl von Rippen (24) der oder jeder Serie zwischen 2 und 10, und bevorzugt zwischen 4 und 8, liegt.

6. Schaufel (10) nach einem der vorstehenden Ansprüche, wobei jede der Rippen (24) eine entlang der Längsachse (A) gemessene Höhe aufweist, die zwischen 1 und 10 %, und bevorzugt zwischen 1 und 5 %, der entlang derselben Achse (A) gemessenen Höhe des Blattes (12) ausmacht.

7. Schaufel (10) nach einem der vorstehenden Ansprüche, wobei jede der Rippen (24) in Bezug auf die Längsachse (A) geneigt ist.

8. Modul (20) einer Turbomaschine, insbesondere eines Luftfahrzeugs, wobei dieses Modul (20) einen Rotor umfasst, der eine ringförmige Reihe von Schaufeln (10) nach einem der vorstehenden Ansprüche umfasst.

9. Modul (20) nach dem vorstehenden Anspruch, wobei dieses ausgewählt ist aus einem Turbinen- oder Kompressorrad, einem gemischten oder Zentrifugallaufrad und einem Gebläse.

10. Modul (20) nach Anspruch 8 oder 9, wobei der Rotor von einer ringförmigen Beschichtung (22) aus abriebfähigem Material umgeben ist, die in einer Nut (23) eines ringförmigen Gehäuses (25) aufgenommen ist, wobei diese Nut (23) in einer zylindrischen Innenfläche des Gehäuses (25) gebildet ist, die einen Innendurchmesser (D1) aufweist, der im Wesentlichen gleich dem Durchmesser des Rotors ist, der durch die freien Enden der Blätter (12) seiner Schaufeln (10) verläuft.

11. Turbomaschine eines Luftfahrzeugs, das mindestens eine Schaufel (10) nach einem der Ansprüche 1 bis 7 umfasst.

## Claims

1. A rotor vane (10) for a turbomachine, in particular of an aircraft, comprising a blade (12) comprising a pressure face (15) and a suction face (17) extending from a leading edge (14) to a trailing edge (16), the blade (12) comprising an elongation axis (A) extending substantially along the leading (14) and trailing (16) edges, the blade (12) comprising a radially inner end for connection to a rotor and a radially outer free end, the vane (10) further comprising at least one series of fins (24) located on said free end, each of these fins (24) comprising a pressure face (26) located on the side of the suction face (17) of the blade (12), and a suction face (28) located on the side of the pressure face (15) of the blade (12),
**characterized in that** each of the fins (24) is twisted around this elongation axis (A).

2. The vane (10) according to claim 1, wherein the fins (24) of the or each row are arranged one behind the other along a chord (B) of the free end of the blade (12).

3. The vane (10) according to claim 1 or 2, wherein it comprises a single series of fins (24).

4. The vane (10) according to one of the preceding claims, wherein the cumulative lengths of the chords of the fins (24) are between 80% and 120% of a chord (B) of the free end of the blade (12).

5. The vane (10) according to one of the preceding claims, wherein the number of fins (24) in the or each series is between 2 and 10, and preferably between 4 and 8.

6. The vane (10) according to one of the preceding claims, wherein each of the fins (24) has a height measured along said elongation axis (A) which represents between 1 and 10%, and preferably between 1 and 5%, of the height of the blade (12) measured along the same axis (A).

7. The vane (10) according to one of the preceding claims, wherein each of the fins (24) is inclined with respect to said elongation axis (A).

8. A turbomachine module (20), in particular for an aircraft, this module (20) comprising a rotor comprising an annular row of vanes (10) according to one of the preceding claims.

9. The module (20) according to the preceding claim, wherein it is selected from a turbine or compressor wheel, a mixed or centrifugal spinning wheel, and a fan.

10. The module (20) according to claim 8 or 9, wherein the rotor is surrounded by an annular coating (22) of abradable material which is housed in a groove (23) of an annular casing (25), this groove (23) being formed in an inner cylindrical surface of the casing (25) which has an inner diameter (D1) substantially equal to the diameter of the rotor passing through the free ends of the blades (12) of its vanes (10).

11. An aircraft turbomachine, comprising at least one vane (10) according to one of claims 1 to 7.
